# EUROPÄISCHE PATENTSCHRIFT

(11) **EP 1 804 082 B1**
(45) Veröffentlichungstag und Bekanntmachung des Hinweises auf die Patenterteilung: **17.03.2010**
(21) Anmeldenummer: 05113054.0
(22) Anmeldetag: 29.12.2005
(51) Int. Cl.: G01T 1/29

(54) **Vorrichtung zum Auslesen von in einer Speicherleuchtstoffschicht abgespeicherten Röntgeninformationen sowie Radiografiemodul**
Device for reading out X-ray information stored in a storage phosphor layer and radiography module
Dispositif destiné à la lecture d'informations radiographiques stockées dans une couche fluorescente de mémoire et module de radiographie

(43) Veröffentlichungstag der Anmeldung: 04.07.2007
(73) Patentinhaber: Agfa-Gevaert HealthCare GmbH, 50670 Köln (DE)
(72) Erfinder: Mair, Stephan, D-86163 Augsburg (DE); Stallmeister, Stephan, D-85625 Glonn (DE); Nissen, Jens, D-81825 München (DE)

(56) Entgegenhaltungen:
- US-A- 4 786 808
- US-A- 5 151 597
- PATENT ABSTRACTS OF JAPAN Bd. 2003, Nr. 12, 5. Dezember 2003 (2003-12-05) -& JP 2003 344964 A (KONICA MINOLTA HOLDINGS INC), 3. Dezember 2003 (2003-12-03)

## Beschreibung

Die vorliegende Erfindung betrifft eine Vorrichtung zum Auslesen von in einer Speicherleuchtstoffschicht abgespeicherten Röntgeninformationen gemäß dem Oberbegriff des Anspruchs 1 sowie ein Radiografiemodul.

Solche Vorrichtungen werden insbesondere im Bereich der Computer-Radiografie (CR) für medizinische Zwecke eingesetzt. Dabei wird von einem Objekt, beispielsweise einem Patienten oder einem Körperteil des Patienten, mittels Röntgenbestrahlung ein Bild erzeugt, das in einer Speicherleuchtstoffschicht als latentes Bild abgespeichert wird. Ein solches Röntgenbild enthält somit Röntgeninformationen über das Objekt. Zum Auslesen der in der Speicherleuchtstoffschicht abgespeicherten Röntgeninformationen wird die Speicherleuchtstoffschicht mittels einer Bestrahlungseinrichtung angeregt. Die Speicherleuchtstoffschicht emittiert aufgrund dieser Anregung Licht, das eine Intensität entsprechend der in der Speicherleuchtstoffschicht abgespeicherten Röntgeninformationen aufweist. Das von der Speicherleuchtstoffschicht ausgesandte Licht wird von einer Detektionseinrichtung erfasst und in elektrische Signale gewandelt, die ein Abbild der Röntgeninformationen enthalten. Die elektrischen Signale werden weiterverarbeitet und die in der Speicherleuchtstoffschicht abgespeicherten Röntgeninformationen anschließend sichtbar gemacht. Die Röntgeninformationen können beispielsweise direkt auf einem Monitor dargestellt oder mittels eines speziell für Röntgenbilder verwendbaren Druckers auf einen fotografischen Röntgenfilm geschrieben werden.

Es ist bereits eine Auslesevorrichtung zum Auslesen von Röntgeninformationen bekannt, die als selbständiges Modul ausgeführt ist, das zur Aufnahme von Röntgenbildern in unterschiedliche Röntgensysteme, wie z. B. einen Röntgenstand oder Röntgentisch, eingeführt oder integriert werden kann. Zum Auslesen der Röntgeninformationen kann die Auslesevorrichtung in dem Röntgensystem verbleiben. Abhängig von den verschiedenen Ausgestaltungen der verwendeten Röntgensysteme kann die Auslesevorrichtung in unterschiedlichen Ausrichtungen oder Orientierungen in die Röntgensysteme eingeführt sein. Dazu ist die Auslesevorrichtung schwenkbar. Die Auslesevorrichtung kann beispielsweise in einem Winkelbereich von 0° bis 90° gegen die Horizontale schwenkbar sein. Dadurch ist sie sehr flexibel in einer Vielzahl von unterschiedlichen Röntgensystemen einsetzbar. Aber auch beim Auslesen der Röntgeninformationen außerhalb eines Röntgensystems ist man durch die Möglichkeit des Schwenkens nicht an eine einzige Ausleseposition gebunden, sondern kann diese, je nach vorhandenen Verhältnissen, geeignet auswählen. Es wurde allerdings festgestellt, dass sich die Qualitäten der ausgelesenen Röntgenbilder abhängig von dem Verschwenken unterscheiden und insbesondere Verzerrungen im ausgelesenen Röntgenbild auftreten können.

Aus JP 2003-344964 A ist eine gattungsgemäße Vorrichtung bekannt, bei welcher die Geschwindigkeit einer Speicherleuchtstoffplatte mittels eines Linear-Encoders erfasst wird. Durch eine Geschwindigkeitssteuerung wird ein Motor mit einem Signal angesteuert ist, das eine umgekehrte Phasenlage zu dem Signal aufweist, das die Geschwindigkeitsdifferenz zwischen der erfassten Geschwindigkeit der Speicherleuchtstoffplatte und einer Referenzgeschwindigkeit angibt. Auf diese Weise wird eine konstante Geschwindigkeit der Speicherleuchtstoffplatte erreicht, wodurch Bildverzerrungen vermindert oder eliminiert werden können.

Es ist daher die Aufgabe der vorliegenden Erfindung, eine Vorrichtung zum Auslesen von in einer Speicherleuchtstoffschicht abgespeicherten Röntgeninformationen oder ein Radiografiemodul anzugeben, mit denen auf technisch einfache Weise eine gute Bildqualität des ausgelesenen Röntgenbildes gewährleistet werden kann.

Diese Aufgabe wird gemäß der technischen Lehre des Anspruchs 1 oder des Anspruchs 10 gelöst. Die erfindungsgemäße Vorrichtung zum Auslesen von in einer Speicherleuchtstoffschicht abgespeicherten Röntgeninformationen enthält eine Bestrahlungseinrichtung zum Bestrahlen der Speicherleuchtstoffschicht mit einer Änregungsstrahlung und eine Detektionseinrichtung zum Erfassen von Emissionsstrahlung, die die Speicherleuchtstoffschicht aufgrund des Bestrahlens mittels der Anregungsstrahlung ausgibt. Die Bestrahlungseinrichtung und die Detektionseinrichtung sind einander fest zugeordnet. Die Bestrahlungs- und die Detektionseinrichtung können beispielhaft so angeordnet sein, dass sie der Speicherleuchtstoffschicht unmittelbar benachbart sind. Auf diese Weise kann die Anregungsstrahlung besonders exakt auf die anzuregende Speicherleuchtstoffschicht gerichtet und die von der Speicherleuchtstoffschicht aufgrund des Anregens ausgegebene Emissionsstrahlung besonders genau erfasst werden. Darüber hinaus enthält die Vorrichtung eine Antriebseinrichtung zum Erzeugen einer Relativbewegung zwischen der Speicherleuchtstoffschicht einerseits und der Bestrahlungseinrichtung und der Detektionseinrichtung andererseits. Erfindungsgemäß weist die Vorrichtung ein Erfassungsmittel zum Erfassen einer Geschwindigkeit der Relativbewegung auf. Dadurch kann die aktuelle Geschwindigkeit der Relativbewegung bestimmt werden. Weicht diese beispielsweise von einer gewünschten Geschwindigkeit ab, so kann die Vorrichtung die Abweichung vorteilhafterweise beim Auslesen und/oder einem Verarbeiten der ausgelesenen Röntgeninformationen berücksichtigen. Dies ist vor allem dann vorteilhaft, wenn die Vorrichtung schwenkbar ausgestaltet ist. In das erfindungsgemäße Radiografiemodul ist eine erfindungsgemäße Vorrichtung zum Auslesen von Röntgeninformationen integriert. Erfindungsgemäß ist außerdem ein Steuermittel zum Verarbeiten der aus der Speicherleuchtstoffschicht ausgelesenen Röntgeninformationen vorhanden, das so ausgestaltet ist, dass es die ausgelesenen Röntgeninformationen in Abhängigkeit von der erfassten Geschwindigkeit der Relativbewegung verarbeitet. Dadurch kann besonderes effizient eine gute Qualität des Röntgenbilds erreicht werden, indem die beim Auslesen auftretenden unerwünschten Verzerrungen mittels des Steuermittels beim Verarbeiten der Röntgeninformationen heraus korrigiert werden.

Der Erfindung liegt die Erkenntnis zugrunde, dass eine insbesondere schwenkbare Auslesevorrichtung je nach ihrer Ausrichtung, d. h. ihrer Orientierung oder Lage, einer unterschiedlichen Belastung durch die Schwerkraft unterliegt. Da beim Auslesen der Röntgeninformationen sehr hohe Gleichlaufforderungen an die Auslesevorrichtung bestehen und die Komponenten der Auslesevorrichtung hohen Anforderungen an die Exaktheit ihrer Arbeits- und Funktionsweisen unterliegen, ist die bei unterschiedlichen Ausrichtungen der Auslesevorrichtung unterschiedlich stark auf die Auslesevorrichtung und ihre Komponenten wirkende Schwerkraft von großer Bedeutung. Erfindungsgemäß ist es beispielsweise möglich, Artefakte im ausgelesenen Röntgenbild zu vermeiden, die abhängig von der Ausrichtung der Vorrichtung auftreten. Solche Artefakte könne z. B. aufgrund von Verbiegungen einzelner Komponenten der Auslesevorrichtung durch ihr Eigengewicht auftreten. Des Weiteren ist es möglich, dass Verzerrungen oder Artefakte durch eine Änderung einer Auslesegeschwindigkeit auftreten, mit der die Speicherleuchtstoffschicht ausgelesen wird. Abhängig von der Ausrichtung der Auslesevorrichtung kann z. B. ein Schlupf beim Auslesen auftreten, der insbesondere mehr oder weniger groß sein kann. Dies führt zu Änderungen der Auslesegeschwindigkeit. Aufgrund der vorliegenden Erfindung erhält die Vorrichtung vorteilhafterweise die Möglichkeit, das Erfassen der Geschwindigkeit zu nutzen, um Verzerrungen und andere schädliche Einflüsse auf die Qualität des ausgelesenen Röntgenbilds zu vermeiden.

In einer vorteilhaften Ausgestaltung der Erfindung ist das Erfassungsmittel so ausgestaltet, dass es die Geschwindigkeit beim Auslesen der abgespeicherten Röntgeninformationen mehrfach erfasst. Dadurch können sich während des Auslesens mehrfach ändernde Geschwindigkeiten, z. B. wenn sich ein beim Auslesen auftretender Schlupf während des Auslesens ändert, festgestellt und geeignet korrigiert werden. Dadurch kann eine noch weitere verbesserte Qualität beim Auslesen von Röntgenbildern erreicht werden.

Besonders bevorzugt ist das Erfassungsmittel so ausgestaltet, dass es wenigstens eine mittlere Geschwindigkeit der Relativbewegung erfasst. Diese mittlere Geschwindigkeit wird zwischen wenigstens zwei relativen Positionen erfasst, welche die Speicherleuchtstoffschicht relativ zur Bestrahlungseinrichtung und Detektionseinrichtung einnimmt. Ein solches Bestimmen der mittleren Geschwindigkeit ist besonders einfach umzusetzen.

Vorzugsweise wird die mittlere Geschwindigkeit während des Auslesens der Röntgeninformationen erfasst. Hierdurch wird eine besonders hohe Bildqualität gewährleistet.

Bevorzugt weist das Erfassungsmittel wenigstens zwei Sensoren auf, die den wenigstens zwei relativen Positionen zugeordnet sind. Die wenigstens zwei Sensoren dienen zum Bestimmen einer Zeit, die die Relativbewegung beim Auslesen der Röntgeninformationen zwischen dem Erreichen der wenigstens zwei Postitionen benötigt. Die Sensoren können insbesondere Lichtschranken sein. Dies ist besonders kostengünstig und einfach zu realisieren. Des Weiteren funktionieren Lichtschranken vorteilhafterweise trägheitsfrei.

Vorzugsweise enthält das Steuermittel vorgegebene Angaben zum Verarbeiten der ausgelesenen Röntgeninformationen. Dabei ist es so ausgestaltet, dass es wenigstens einen Teil der vorgegebene Angaben in Abhängigkeit von dem Erfassen der Geschwindigkeit der Relativbewegung auswählt und die ausgewählten Angaben zum Verarbeiten der Röntgeninformationen verwendet. Die Angaben zum Verarbeiten der ausgelesenen Röntgeninformationen können vorteilhafterweise in einer Tabelle, einer sogenannten Look-Up Tabelle, enthalten sein, die sich auf besonders einfache Weise in dem Steuermittel implementieren lässt. Die Angaben zum Verarbeiten der ausgelesenen Röntgeninformationen können für verschieden Ausrichtungen der Vorrichtung, z. B. mittels Tests, bereits vor dem Auslesen der Röntgeninformationen ermittelt werden.

Bevorzugt ist das Steuermittel so ausgestaltet, dass es, in Richtung der Relativbewegung betrachtet, eine Pixelgröße der ausgelesenen Röntgeninformationen in Abhängigkeit von der erfassten Geschwindigkeit der Relativbewegung festlegt. Zusätzlich oder alternativ ist das Steuermittel vorteilhafterweise so ausgestaltet, dass es eine Intensität der ausgelesenen Röntgeninformationen in Abhängigkeit von der erfassten Geschwindigkeit der Relativbewegung festlegt. Durch diese Ausgestaltungen lassen sich besonders effizient relevante Verbesserungen der Qualität des Röntgenbildes gewährleisten.

Erfindungsgemäß ist ein weiteres Steuermittel zum Steuern der Vorrichtung vorhanden. Das weitere Steuermittel ist so ausgestaltet, dass es das Auslesen der Röntgeninformationen in Abhängigkeit von der erfassten Geschwindigkeit der Relativbewegung steuert. In diesem Fall erfolgt bereits das Auslesen selbst in geeigneter Weise, so dass unerwünschte Verzerrungen schon frühzeitig beim Erfassen der Röntgeninformationen vermieden werden. Das weitere Steuermittel kann eine oder mehrere Komponenten der Vorrichtung in Abhängigkeit von der erfassten Ausrichtung in geeigneter Weise ansteuern.

Besonders bevorzugt ist das weitere Steuermittel so ausgestaltet, dass es die Bestrahlungseinrichtung in Abhängigkeit von der erfassten Geschwindigkeit der Relativbewegung ansteuert. Dabei können vorteilhafterweise unterschiedliche Auslesetiefen in der Speicherleuchtstoffschicht vermieden werden. Diese entstehen bei unterschiedlichen Auslesegeschwindigkeiten durch Änderungen der in die Speicherleuchtstoffschicht eingebrachten Anregungsstrahlung. Bei langsamer Auslesegeschwindigkeit ist die Menge der in die Speicherleuchtstoffschicht eingebrachten Anregungsstrahlung höher und die Menge an ausgegebener Emissionsstrahlung größer, als bei schneller Auslesegeschwindigkeit. Insofern ist bei langsamer Auslesegeschwindigkeit die Intensität der ausgelesenen Röntgeninformationen größer, als bei schneller Auslesegeschwindigkeit.

Erfindungsgemäß ist das weitere Steuermittel so ausgestaltet, dass es die Detektionseinrichtung in Abhängigkeit von der erfassten Geschwindigkeit der Relativbewegung ansteuert. Bei langsamer Auslesegeschwindigkeit ist die Menge an ausgegebener Emissionsstrahlung größer, als bei schneller Auslesegeschwindigkeit. Dies kann auf einfache Weise ausgeglichen werden, indem die Zeit, in der die Detektionseinrichtung ausgegebene Emissionsstrahlung aufnimmt, entsprechend abhängig von der Ausrichtung der Vorrichtung eingestellt wird.

Vorzugsweise ist das weitere Steuermittel so ausgestaltet, dass es die Geschwindigkeit der Relativbewegung in Abhängigkeit von der erfassten Geschwindigkeit der Relativbewegung steuert. Damit kann auf technisch einfache Weise die Geschwindigkeit selbst gesteuert werden. Eine der grundlegenden Ursachen für das Auftreten von Verzerrungen kann dadurch von Beginn an unterbunden werden.

Weitere Vorteile der Erfindung ergeben sich aus der folgenden Beschreibung von Ausführungsbeispielen, wobei Bezug auf die beigefügten Zeichnungen genommen wird.

Es zeigen:
- Fig. 1: eine schematische, perspektivische Darstellung eines Ausführungsbeispiels einer erfindungsgemäßen Vorrichtung zum Auslesen von in einer Speicherleuchtstoffschicht abgespeicherten Röntgeninformationen, wobei die Vorrichtung als Radiografiemodul ausgestaltet ist,
- Fig. 2: eine weitere schematische Darstellung eines Aufbaus des Radiografiemoduls nach Fig. 1 und
- Fig. 3: eine schematische Darstellung eines Anwendungsbeispiels des Radiografiemoduls nach Fig. 1 eingesetzt in einem Röntgensystem.

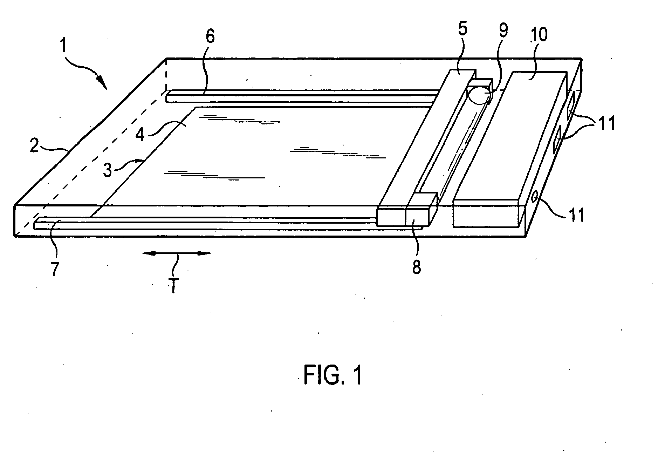

Fig. 1 zeigt eine schematische, perspektivische Darstellung eines Ausführungsbeispiels einer erfindungsgemäßen Auslesevorrichtung zum Auslesen von in einer Speicherleuchtstoffschicht abgespeicherten Röntgeninformationen. Die Auslesevorrichtung ist hier als Radiografiemodul 1 ausgestaltet. Das Radiografiemodul 1 kann zur Aufnahme von Röntgenbildern in unterschiedliche Röntgensysteme, wie z. B. einen Röntgenstand oder Röntgentisch, eingeführt oder integriert werden. Dazu ist das Radiografiemodul 1 schwenkbar. Zum Auslesen des in der Speicherleuchtstoffschicht abgespeicherten Röntgenbilds kann das Radiografiemodul 1 im Röntgensystem verbleiben und muss nicht - wie eine herkömmliche Röntgenkassette - aus dem Röntgensystem entnommen und einer separaten Auslesestation zugeführt werden.

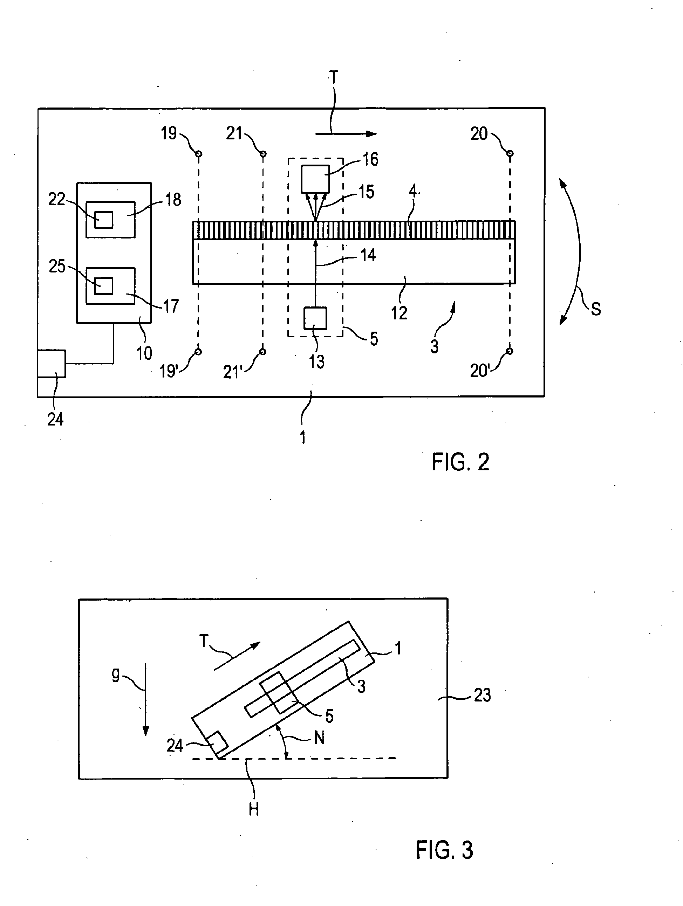

Das Radiografiemodul 1 umfasst ein Gehäuse 2, in welchem eine Speicherleuchtstoffplatte 3 angeordnet ist. Die Speicherleuchtstoffplatte 3 weist eine Speicherleuchtstoffschicht 4 und eine Trägerschicht auf, auf der die Speicherleuchtstoffschicht 4 aufgebracht ist (Fig. 2). Die Speicherleuchtstoffschicht 4 ist hier die obere Schicht der Speicherleuchtstoffplatte 3. Die Speicherleuchtstoffplatte 3 ist in dem Gehäuse 2 des Radiografiemoduls 1 ortsfest angeordnet, d. h. die Speicherleuchtstoffplatte 3 ist über geeignete Verbindungselemente fest mit dem Gehäuse 2 verbunden. Die Verbindung mit dem Gehäuse 2 kann hierbei starr oder auch schwingend sein, z. B. mittels geeigneter Aufhängungselemente, um etwaige äußere Stöße auf das Gehäuse 2 und deren Übertragung auf die Speicherleuchtstoffplatte 3 zu dämpfen.

Das Radiografiemodul 1 enthält ferner einen Lesekopf 5 zum Auslesen der Röntgeninformationen aus der Speicherleuchtstoffschicht 4. Der Lesekopf 5 ist in dem Gehäuse 2 beweglich gelagert. Dazu sind im Bereich der beiden Längsseiten der Speicherleuchtstoffplatte 3 Führungen 6 und 7 angeordnet, die dem Lesekopf 5 als Lager, vorzugsweise in Form von Luftlager, und Führung dienen. Zum Auslesen der Röntgeninformationen wird der Abtastkopf 5 durch einen geeigneten Antrieb 8, z. B. einen Linearmotor oder einen Schrittmotor mit Reibradgetriebe und Seilantrieb, angetrieben und in eine Transportrichtung T über die Speicherleuchtstoffplatte 3 bewegt. Zwischen der Speicherleuchtstoffschicht 4 und dem Lesekopf 5 findet somit eine Relativbewegung zum Auslesen statt. Das Antreiben des Lesekopfs 5, und damit die Relativbewegung zwischen der Speicherleuchtstoffschicht 4 und dem Lesekopf 5, erfolgt kontinuierlich mit einer sehr genauen linearen und konstanten Geschwindigkeit. Im vorliegenden Ausführungsbeispiel ist der Lesekopf 5 über die Speicherleuchtstoffschicht 4 bewegbar, während die Speicherleuchtstoffschicht 4 im Gehäuse 2 fest angeordnet ist. Es ist allerdings ebenso möglich, den Lesekopf 5 im Gehäuse ortsfest anzuordnen und die Speicherleuchtstoffplatte 3 am Lesekopf 5 vorbei zu bewegen.

Zusätzlich zum Lesekopf 5 ist eine Löschlampe 9 vorgesehen, die ebenfalls von dem Antrieb 8 angetrieben und über die Speicherleuchtstoffschicht 4 bewegt werden kann. Die Löschlampe 9 dient dazu, etwaige Restinformationen in der Speicherleuchtstoffschicht 4, die nach dem Auslesen noch vorhanden sein können, vor einer nachfolgenden Röntgenaufnahme zu löschen.

Es ist des Weiteren eine Steuereinrichtung 10 vorgesehen, die den Auslese- und Löschvorgang sowie etwaige Signalverarbeitungsprozesse steuert. An der Steuereinrichtung 10 sind verschiedene Schnittstellen 11 vorhanden, die zum Übertragen von Energie, ggf. Luft, Steuersignalen und/oder Bildsignalen zum und vom Radiografiemodul 1 erforderlich sind.

Fig. 2 zeigt eine weitere schematische Darstellung eines Aufbaus des Radiografiemoduls 1 nach Fig. 1. Das Radiografiemodul 1 ist hier in einer Seitenansicht gezeigt. Dargestellt ist die Speicherleuchtstoffplatte 3, die eine Trägerschicht 12 und die Speicherleuchtstoffschicht 4 aufweist. Die Speicherleuchtstoffschicht 4 setzt sich vorzugsweise aus einer Vielzahl von Phosphorpartikeln zusammen, die zum Speichern der Röntgeninformationen dienen. Die Trägerschicht 12 kann ein Laminat sein, das aus verschiedenen Schichten und Materialien zusammengesetzt ist. Die Trägerschicht 12 ist hier eine transparente Trägerschicht, die für Strahlung teilweise durchlässig ist.

Der Lesekopf 5 enthält eine Bestrahlungseinrichtung 13, die zum Bestrahlen der Speicherleuchtstoffschicht 4 mit einer Anregungsstrahlung 14 dient. Als Bestrahlungseinrichtung 13 wird hier eine Laserdiodenzeile eingesetzt werden, die eine Vielzahl von nebeneinander angeordneten Laserdioden enthält. Mit dieser Laserdiodenzeile wird eine Zeile der Speicherleuchtstoffschicht 4 gleichzeitig bestrahlt und angeregt. Es ist aber ebenso möglich, eine anders ausgestaltete Bestrahlungseinrichtung 13 zu verwenden.

Aufgrund des Anregens der Speicherleuchtstoffschicht 4 mittels der Anregungsstrahlung 14 emittiert die Speicherleuchtstoffschicht 4 eine Emissionsstrahlung 15, deren Intensität von den in der Speicherleuchtstoffschicht 4 abgespeicherten Röntgeninformationen abhängt. Zum Erfassen der emittierten Emissionsstrahlung enthält der Lesekopf 5 eine Detektionseinrichtung 16. Die Detektionseinrichtung 16 weist hier einen Zeilendetektor auf, der eine sogenannte "charge-coupled-device" (CCD)-Zeile enthalten kann. Die CCD-Zeile weist eine Vielzahl von parallel in einer Linie nebeneinander angeordneten Fotodetektoren auf. Mittels der Detektionseinrichtung 16 kann eine fotoelektrische Wandlung der empfangenen Emissionsstrahlung 15 durchgeführt werden. Die Detektionseinrichtung 16 wird in einem vorgegebenen Zeitabstand ausgelesen. Alternativ kann die Detektionseinrichtung 16 statt der CCD-Zeile beispielsweise einen Lichtleiter mit einem angeschlossenen Photomultiplier aufweisen. Zwischen der Bestrahlungseinrichtung 13 und der Detektionseinrichtung 16 besteht eine feste Verbindung, so dass die Abbildung der in der Speicherleuchtstoffschicht 4 gespeicherten Röntgeninformationen, d. h. die Anregung der Speicherleuchtstoffschicht 4 und der Empfang der aufgrund der Anregung emittierten Strahlung 15, genau aufeinander abgestimmt sind und auch während des eigentlichen Auslesevorgangs immer eine exakte Zuordnung gewährleistet ist.

Die Bestrahlungseinrichtung 13 ist im vorliegenden Ausführungsbeispiel unterhalb und die Detektionseinrichtung 16 oberhalb der Speicherleuchtstoffplatte 3 angeordnet. Die Bestrahlungseinrichtung 13 ist der Trägerschicht 12 und die Detektionseinrichtung 16 der Speicherleuchtstoffschicht 4 unmittelbar benachbart. Die Anregungsstrahlung 14 kann dabei in die transparente Trägerschicht 12 eindringen und von unten zur Speicherleuchtstoffschicht 4 gelangen.

Die Steuereinrichtung 10 enthält ein erstes Steuermittel 17 zum Steuern des Radiografiemoduls 1 und seiner Komponenten. Das erste Steuermittel 17 steuert daher insbesondere die Funktionen der Bestrahlungseinrichtung 13 und der Detektionseinrichtung 16 sowie des Antriebs 8. Das erste Steuermittel 17 ist mit diesen Komponenten des Radiografiemoduls 1 verbunden. Ferner enthält die Steuereinrichtung 10 ein zweites Steuermittel 18 zum Verarbeiten der aus der Speicherleuchtstoffschicht 12 ausgelesenen Röntgeninformationen. Das zweite Steuermittel 18 ist insbesondere mit dem Detektionsmittel 16 verbunden, um die von diesem erzeugten elektrischen Signale, die ein Abbild der in der Speicherleuchtstoffschicht 4 abgespeicherten Röntgeninformationen enthalten, zu verarbeiten. Die beiden Steuermittel 17 und 18 können auch durch ein einziges Steuermittel realisiert sein.

Der Lesekopf 5, d. h. sowohl die Bestrahlungseinrichtung 13 als auch die Detektionseinrichtung 16, wird zum Auslesen der Röntgeninformationen mittels des Antriebs 8 mit einer Transportgeschwindigkeit entlang der Speicherleuchtstoffplatte 3 in die Transportrichtung T bewegt. Die Größe der Pixel im ausgelesenen Röntgenbild, und damit dessen Auflösung, ist, in Transportrichtung T betrachtet, u. a. abhängig von dieser Transportgeschwindigkeit und dem vorgegebenen Zeitabstand zum Auslesen der Detektionseinrichtung 16. Das erfindungsgemäße Radiografiemodul 1 enthält drei Sensoren, mit denen sich die Transportgeschwindigkeit überprüfen lässt. Ein erster Sensor 19, 19' ist, in Transportrichtung T betrachtet, am Anfang der Speicherleuchtstoffplatte 3, ein zweiter Sensor 20, 20' an deren Ende und ein dritter Sensor 21, 21' im ersten Drittel der Speicherleuchtstoffplatte 3 angeordnet. Alternativ kann einer oder mehrere dieser Sensoren 19, 19' bzw. 20, 20' bzw. 21, 21' auch vor der Speicherleuchtstoffplatte 3 angeordnet sein. Es ist möglich, weitere oder auch weniger Sensoren vorzusehen. Die Sensoren 19, 19', 20, 20', 21, 21' sind hier Lichtschranken, die ihr Durchfahren durch den Lesekopf 5 detektieren. Es ist aber auch möglich, andere Arten von Sensoren einzusetzen. Mittels der beiden Sensoren 19, 19' und 20, 20' lässt sich eine Zeit zu Beginn und eine Zeit am Ende des Auslesevorgangs feststellen. Der Sensor 21, 21' stellt eine Zeit noch relativ zu Beginn des Auslesevorgangs, allerdings nach genügend langer, zurückgelegter Wegstrecke, fest, um zu gewährleisten, dass ein Meßergebnis für eine relevante Wegstrecke bestimmt wird. Mittels der Sensoren 19, 19', 20, 20', 21, 21' wird die Zeit gemessen, die der Lesekopf 5 benötigt, um die Strecke zwischen den Sensoren 19, 19', 20, 20', 21, 21' zurückzulegen. Daraus ergibt sich eine mittlere Transportgeschwindigkeit des Lesekopfs 5, da die Strecken bekannt sind.

Die Sensoren 19, 19', 20, 20', 21, 21' sind mit den beiden Steuermitteln 17, 18 verbunden, um ihr Durchfahren durch den Lesekopf 5 zum Verwerten durch die Steuermittel 17, 18 weiterzuleiten. Die Steuermittel 17, 18 können eine Abweichung der gemessenen mittleren Transportgeschwindigkeit von einer vorgegebenen Transportgeschwindigkeit feststellen. Daraufhin können sie entsprechende Gegenmaßnahmen veranlassen.

Das erste Steuermittel 17 zum Steuern des Radiografiemoduls 1 kann vorteilhafterweise unmittelbar nach dem Durchfahren des dritten Sensors 21, 21' durch den Lesekopf 5 bei zu korrigierender Geschwindigkeit ein entsprechend geeignetes Ansteuern von Komponenten des Radiografiemoduls 1 vornehmen. Dadurch, dass der dritte Sensor 21, 21' hier bereits im ersten Drittel der Wegstrecke zum Auslesen der Röntgeninformationen angeordnet ist, kann das erste Steuermittel 17 gegebenenfalls bereits beim weiteren Auslesen des aktuellen Röntgenbilds ein geeignetes Ansteuern der Komponenten vornehmen. Der Antrieb 8 kann veranlasst werden, in Abhängigkeit von der vorzunehmenden Korrektur den Lesekopf 5 schneller oder langsamer anzutreiben. Zusätzlich oder alternativ kann das erste Steuermittel 17 so ausgestaltet sein, dass es die Bestrahlungseinrichtung 13 so ansteuert, dass sie die Strahlungsintensität der Anregungsstrahlung 14 oder die Dauer des Einstrahlens der Anregungsstrahlung in eine Zeile der Speicherleuchtstoffschicht in geeigneter Weise verändert. Bei zu schneller Transportgeschwindigkeit kann die Strahlungsintensität der Anregungsstrahlung vorteilhafterweise erhöht und bei zu langsamer Transportgeschwindigkeit erniedrigt werden, um möglichst gleichbleibende Strahlungsmengen der Anregungsstrahlung beim Anregen der Zeilen der Speicherleuchtstoffschicht 4 zu erhalten. Des Weiteren zusätzlich oder alternativ kann das erste Steuermittel 17 so ausgestaltet sein, dass es die Detektionseinrichtung 16 so ansteuert, dass die Zeitdauer des Aufsammelns von Emissionsstrahlung pro Zeile der Speicherleuchtstoffschicht 4 verändert wird. Bei zu schneller Transportgeschwindigkeit kann die Zeitdauer vorteilhafterweise verkürzt und bei zu langsamer Transportgeschwindigkeit verlängert werden, um eine möglichst konstante Pixelgröße, und damit Auflösung, im Röntgenbild, in Transportrichtung T betrachtet, zu erhalten. Die Strecken, die von dem Lesekopf 5 für das Auslesen der einzelnen Zeilen der Speicherleuchtstoffschicht 4 zurückgelegt werden, sind dann konstant.

Das zweite Steuermittel 18 zum Verarbeiten der ausgelesenen Röntgeninformationen ist vorteilhafterweise so ausgestaltet, dass es die ausgelesenen Röntgeninformationen in Abhängigkeit von der erfassten Transportgeschwindigkeit verarbeitet. Die erfasste Transportgeschwindigkeit kann sich dabei aus mehreren Teil-Transportgeschwindigkeiten zusammen setzen. Dazu stehen die bestimmte mittlere Teil-Geschwindigkeit beim Zurücklegen der Strecke zwischen den Sensoren 19, 19' und 20, 20', der Strecke zwischen den Sensoren 19, 19' und 21, 21' und/oder der Strecke zwischen den Sensoren 21, 21' und 20, 20' zur Verfügung. Diese Teil-Geschwindigkeiten können von dem zweiten Steuermittel einzeln oder in einer geeigneten Kombination verwendet werden. Das zweite Steuermittel 18 enthält hier vorgegebene Angaben zum Verarbeiten der ausgelesenen Röntgeninformationen. Diese Angaben enthalten Vorgaben, wie die ausgelesenen Röntgeninformationen zu korrigieren sind. Die Angaben sind in einem Speicher 22 des zweiten Steuermittels 18 vor allem als sogenannte Look-Up Tabellen abgespeichert. Sie wurden vorteilhafterweise in Vorversuchen bestimmt und geben typische Korrekturmöglichkeiten an, die insbesondere Erfahrungswerten entsprechen. Das zweite Steuermittel 18 ist so ausgestaltet, dass es wenigstens einen Teil der vorgegebene Angaben in Abhängigkeit von der erfassten Transportgeschwindigkeit auswählt und die ausgewählten Angaben zum Verarbeiten der Röntgeninformationen verwendet. Das zweite Steuermittel 18 legt, in Richtung der Relativbewegung betrachtet, die Pixelgröße der ausgelesenen Röntgeninformationen und/oder eine Intensität der ausgelesenen Röntgeninformationen in Abhängigkeit von der erfassten Transportgeschwindigkeit fest. Somit kann gewährleistet werden, dass die Intensitäten von ausgelesenen und verarbeiteten Röntgenbildern gleich und deren Auflösungen, insbesondere in Transportrichtung T betrachtet, konstant sind.

Wie bereits zuvor beschrieben, ist das Radiografiemodul 1 schwenkbar. Dies ist in der Fig. 2 durch einen gebogenen Doppelpfeil S kenntlich gemacht. Zum Verschwenken kann das Radiografiemodul 1 eine Drehachse aufweisen, um die es schwenkbar ist. Das Radiografiemodul 1 kann in unterschiedlichen Ausrichtungen, d. h. Orientierungen oder Lagen, verwendet werden. Die Ausrichtung des Radiografiemoduls 1 ergibt sich beispielsweise durch die Ausgestaltung einer Aufnahmeeinrichtung für das Radiografiemodul 1 in einem Röntgensystem, z. B. einem Röntgentisch, in dem das Radiografiemodul 1 eingesetzt wird. Diese Aufnahmeeinrichtung kann eine Neigung gegenüber einer Horizontalen haben. Fig. 3 zeigt ein Beispiel für ein Röntgensystem 23, in das das Radiografiemodul 1 eingeschoben wurde. Das Radiografiemodul 1 hat in dem Röntgensystem 23 eine Neigung N gegenüber einer Horizontalen H. Aufgrund der Neigung N des Radiografiemoduls 1 haben auch die Speicherleuchtstoffplatte 3 und der Lesekopf 5 eine solche Neigung N. Dies bedeutet, dass beim Antreiben des Lesekopfs 5 durch die schräge, geschwenkte Ausrichtung des Radiografiemoduls 1 eine Schwerkraft g auf das Antreiben, d. h. den Vorschub in die Transportrichtung T, des Lesekopfs 5 wirkt. Die Schwerkraft g ergibt sich aus der Erdbeschleunigung. Da für den Lesekopf 5 beim Vorschub ein sehr hoher Gleichlauf erforderlich ist, kann diese Wirkung der Schwerkraft g auf das Auslesen der abgespeicherten Röntgeninformationen nachteilig sein und im ausgelesenen Röntgenbild Verzerrungen verursachen. Beim Antreiben des Lesekopfs 5 mittels des Antriebs 8 kann unter Umständen ein Schlupf auftreten, so dass Artefakte entstehen. Abhängig von dem Grad der Neigung N kann der Einfluss der Schwerkraft g unterschiedlich stark sein. Dieses Auftreten von Schlupf kann mittels der Sensoren 19, 19', 20, 20', 21, 21' festgestellt und seine negativen Auswirkungen auf das ausgelesene Röntgenbild dann mittels des ersten Steuermittels 17 und/oder des zweiten Steuermittels 18 verhindert oder korrigiert werden.

Das Radiografiemodul 1 enthält hier zusätzlich ein Erfassungsmittel 24 zum Erfassen seiner Ausrichtung. Interessant ist hier insbesondere seine Ausrichtung gegen die Horizontale. Das Erfassungsmittel kann beispielsweise ein Beschleunigungssensor sein, der die Richtung der Erdbeschleunigung erfasst. Dadurch kann bestimmt werden, in welche Richtung die Belastung durch die Schwerkraft auf den Lesekopf 5 wirkt. Das Erfassungsmittel 24 ist mit der Steuereinrichtung 10 und insbesondere mit den beiden Steuermitteln 17, 18 verbunden (Fig. 2). Die festgestellte Ausrichtung kann somit an die Steuermittel 17, 18 zum weiteren Verarbeiten weitergeleitet werden.

Das erste Steuermittel 17 ist hier so ausgestaltet, dass es das Auslesen der Röntgeninformationen ferner in Abhängigkeit von der erfassten Ausrichtung des Röntgenmoduls 1 steuert. Das erste Steuermittel 17 steuert dazu ein oder mehrere der Komponenten des Radiografiemoduls 1, insbesondere die Bestrahlungseinrichtung 13, die Detektionseinrichtung 16 und/oder den Antrieb 8, in geeigneter Weise an. Dieses Ansteuern erfolgt in der entsprechenden Weise, wie oben in Zusammenhang mit dem Verändern der Transportgeschwindigkeit beschrieben. Dabei soll vorteilhafterweise ein gleichmäßiges Anregen der Zeilen der Speicherleuchtstoffschicht 4, ein geeignetes Erfassen der Emissionsstrahlung 15 und/oder eine konstante Transportgeschwindigkeit gewährleistet werden. Das erste Steuermittel 17 enthält vorgegebene Angaben zum Steuern der Vorrichtung. Diese Angaben enthalten Vorgaben, wie die jeweiligen Komponenten des Radiografiemoduls 1 in geeigneter Weise zu korrigieren sind. Die Angaben sind in einem Speicher 25 des ersten Steuermittels 17 als sogenannte Look-Up Tabellen abgespeichert. Sie wurden vorteilhafterweise in Vorversuchen bestimmt und geben typische Korrekturmöglichkeiten an, die insbesondere Erfahrungswerten entsprechen. Die Angaben entsprechen Kalibrierkennlinien oder Kalibrierbildern. Das erste Steuermittel 17 ist so ausgestaltet, dass es einen Teil der vorgegebene Angaben in Abhängigkeit von der erfassten Ausrichtung des Radiografiemoduls 1 auswählt und die ausgewählten Angaben deren Steuern verwendet.

Das zweite Steuermittel 18 ist hier so ausgestaltet, dass es die ausgelesenen Röntgeninformationen in Abhängigkeit von dem Erfassen der Ausrichtung des Röntgenmoduls 1 verarbeitet. Dabei sind in dem Speicher 22 weitere vorgegebene Angaben zum Verarbeiten der ausgelesenen Röntgeninformationen enthalten. Die vorgegebenen Angaben wurden ebenfalls durch Vorversuche ermittelt und geben Möglichkeiten an, wie die ausgelesenen Röntgeninformationen abhängig von der Ausrichtung, d. h. insbesondere dem Grad der Neigung N, korrigiert werden. Die weiteren Angaben sind ebenfalls in Form von sogenannten Look-Up Tabellen abgespeichert. Das zweite Steuermittel 18 ist so ausgestaltet, dass es wenigstens einen Teil der vorgegebene Angaben in Abhängigkeit von der erfassten Ausrichtung des Radiografiemoduls 1 auswählt und die ausgewählten Angaben zum Verarbeiten der Röntgeninformationen verwendet. Dabei sollen, wie oben im Zusammenhang mit dem Verändern der Transportgeschwindigkeit beschrieben, die Intensität und/oder die Auflösung der Röntgenbilder geeignet eingestellt werden.

Das Radiografiemodul 1 ist im vorliegenden Ausführungsbeispiel selbstlernend. Das Radiografiemodul 1 ist so ausgestaltet, dass es die von dem Erfassungsmittel 24 erfasste Ausrichtung und die von den Sensoren 19, 19', 20, 20', 21, 21' bei Vorliegen dieser erfasste Ausrichtung erfasste Transportgeschwindigkeit des Lesekopfs 5 einander zuordnet. Diese Zuordnung wird dann den in dem Speicher 22 abgespeicherten vorgegebenen Angaben zum Verarbeiten der Röntgeninformationen und den im Speicher 25 abgespeicherten vorgegebenen Angaben zum Steuern des Radiografiemoduls 1 hinzufügt. Dadurch können diese Angaben immer weiter verfeinert und verbessert werden. Mit zunehmender Benutzung des Radiografiemoduls 1 wird somit dessen Korrektur von durch das Verschwenken aus der Horizontalen heraus entstehende Verzerrungen ständig verbessert. Dies kann für nachfolgende Röntgenbilder genutzt werden.

## Patentansprüche

1. Vorrichtung (1) zum Auslesen von in einer Speicherleuchtstoffschicht (4) abgespeicherten Röntgeninformationen eines Röntgenbilds mit
- einer Bestrahlungseinrichtung (13) zum Bestrahlen der Speicherleuchtstoffschicht (4) mit einer Anregungsstrahlung (14),
- einer Detektionseinrichtung (16) zum Erfassen von Emissionsstrahlung (15), die die Speicherleuchtstoffschicht (4) aufgrund des Bestrahlens mittels der Anregungsstrahlung (14) ausgibt, wobei die Bestrahlungseinrichtung (13) und die Detektionseinrichtung (16) einander fest zugeordnet sind,
- einer Antriebseinrichtung (8) zum Erzeugen einer Relativbewegung zwischen der Speicherleuchtstoffschicht (4) einerseits und der Bestrahlungseinrichtung (13) und der Detektionseinrichtung (16) andererseits, und
- einem Erfassungsmittel (19, 19', 20, 20', 21, 21') zum Erfassen einer Geschwindigkeit der Relativbewegung,
**dadurch gekennzeichnet, dass**
- ein Steuermittel (18) zum Verarbeiten der aus der Speicherleuchtstoffschicht (4) ausgelesenen Röntgeninformationen vorhanden ist, das so ausgestaltet ist, dass es die ausgelesenen Röntgeninformationen in Abhängigkeit von der erfassten Geschwindigkeit der Relativbewegung verarbeitet, wobei es, in Richtung der Relativbewegung betrachtet, eine Pixelgröße und/oder eine Intensität der ausgelesenen Röntgeninformationen in Abhängigkeit von der erfassten Geschwindigkeit der Relativbewegung festlegt, und/oder
- ein weiteres Steuermittel (17) zum Steuern der Vorrichtung (1) vorhanden ist, wobei das weitere Steuermittel (17) so ausgestaltet ist, dass es das Auslesen der Röntgeninformationen in Abhängigkeit von der erfassten Geschwindigkeit der Relativbewegung steuert, wobei es die Detektionseinrichtung (16) in Abhängigkeit von der erfassten Geschwindigkeit der Relativbewegung so ansteuert, dass die Zeitdauer des Aufsammelns von Emissionsstrahlung (15) verändert wird.

2. Vorrichtung nach Anspruch 1, **dadurch gekennzeichnet, dass** das Erfassungsmittel (19, 19', 20, 20', 21, 21') so ausgestaltet ist, dass es die Geschwindigkeit beim Auslesen der abgespeicherten Röntgeninformationen mehrfach erfasst.

3. Vorrichtung nach Anspruch 1 oder 2, **dadurch gekennzeichnet, dass** das Erfassungsmittel (19, 19', 20, 20', 21, 21') so ausgestaltet ist, dass es wenigstens eine mittlere Geschwindigkeit der Relativbewegung erfasst, wobei die mittlere Geschwindigkeit zwischen wenigstens zwei relativen Positionen, welche die Speicherleuchtstoffschicht (4) relativ zur Bestrahlungseinrichtung und Detektionseinrichtung einnimmt, erfasst wird.

4. Vorrichtung nach Anspruch 3, **dadurch gekennzeichnet, dass** die mittlere Geschwindigkeit während des Auslesens der Röntgeninformationen erfasst wird.

5. Vorrichtung nach Anspruch 3 oder 4, **dadurch gekennzeichnet, dass** das Erfassungsmittel (19, 19', 20, 20', 21, 21') wenigstens zwei Sensoren aufweist, die den wenigstens zwei relativen Positionen zugeordnet sind und zum Bestimmen einer Zeit dienen, die die Relativbewegung beim Auslesen der Röntgeninformationen zwischen dem Erreichen der wenigstens zwei Positionen benötigt.

6. Vorrichtung nach Anspruch 5, **dadurch gekennzeichnet, dass** die wenigstens zwei Sensoren Lichtschranken aufweisen.

7. Vorrichtung nach einem der vorhergehenden Ansprüche, **dadurch gekennzeichnet, dass** das Steuermittel (18) vorgegebene Angaben zum Verarbeiten der ausgelesenen Röntgeninformationen enthält und so ausgestaltet ist, dass es wenigstens einen Teil der vorgegebenen Angaben in Abhängigkeit von der erfassten Geschwindigkeit der Relativbewegung auswählt und die ausgewählten Angaben zum Verarbeiten der Röntgeninformationen verwendet.

8. Vorrichtung nach einem der vorhergehenden Ansprüche, **dadurch gekennzeichnet, dass** das weitere Steuermittel (17) so ausgestaltet ist, dass es die Bestrahlungseinrichtung (13) in Abhängigkeit von der erfassten Geschwindigkeit der Relativbewegung ansteuert.

9. Vorrichtung nach einem der vorhergehenden Ansprüche, **dadurch gekennzeichnet, dass** das weitere Steuermittel (17) so ausgestaltet ist, dass es die Geschwindigkeit der Relativbewegung in Abhängigkeit von der erfassten Geschwindigkeit der Relativbewegung steuert.

10. Radiografiemodul, insbesondere in Form einer Röntgenkassette, mit einem Gehäuse, in das eine Vorrichtung(1) nach einem der Ansprüche 1 bis 9 integriert ist.

## Claims

1. An apparatus (1) for reading out X-ray information of an X-ray image stored in a storage phosphor layer (4) comprising
- an irradiation device (13) for irradiating the storage phosphor layer (4) with stimulation radiation (14),
- a detection device (16) for collecting emission radiation (15) which is emitted by the storage phosphor layer (4) due to the irradiation by means of the stimulation radiation (14), the irradiation device (13) and the detection device (16) being firmly assigned to one another,
- a drive device (8) for producing a relative movement between the storage phosphor layer (4) on the one hand and the irradiation device (13) and the detection device (16) on the other hand, and
- a recording means (19, 19', 20, 20', 21, 21') for recording a speed of the relative movement,
**characterised in that**
- a control means (18) for processing the X-ray information read out from the storage phosphor layer (4) is provided which is designed such that it processes the X-ray information read out dependently upon the recorded speed of the relative movement, observed in the direction of the relative movement, a pixel size and/or an intensity of the X-ray information read out being established dependently upon the recorded speed of the relative movement, and/or
- a further control means (17) for controlling the apparatus (1) is provided, the further control means (17) being designed such that it controls the read-out of the X-ray information dependently upon the recorded speed of the relative movement, it controlling the detection device (16) dependently upon the recorded speed of the relative movement such that the duration of the collection of emission radiation (15) is changed.

2. The apparatus according to Claim 1, **characterised in that** the recording means (19, 19', 20, 20', 21, 21') is designed such that it records the speed a number of times when reading out the stored X-ray information.

3. The apparatus according to Claim 1 or 2, **characterised in that** the recording means (19, 19', 20, 20', 21, 21') is designed such that it records at least an average speed of the relative movement, the average speed between at least two relative positions which the storage phosphor layer (4) adopts relative to the irradiation device and the detection device being recorded.

4. The apparatus according to Claim 3, **characterised in that** the average speed is recorded during the read-out of the X-ray information.

5. The apparatus according to Claim 3 or 4, **characterised in that** the recording means (19, 19', 20, 20', 21, 21') has at least two sensors which are assigned to the at least two relative positions and serve to determine a time which the relative movement requires when reading out the X-ray information between reaching the at least two positions.

6. The apparatus according to Claim 5, **characterised in that** the at least two sensors have light cabinets.

7. The apparatus according to any of the preceding claims, **characterised in that** the control means (18) contains pre-specified details for processing the read out X-ray information and is designed such that it selects at least part of the pre-specified details dependently upon the recorded speed of the relative movement and uses the selected details for processing the X-ray information.

8. The apparatus according to any of the preceding claims, **characterised in that** the further control means (17) is designed such that it controls the irradiation device (13) dependently upon the recorded speed of the relative movement.

9. The apparatus according to any of the preceding claims, **characterised in that** the further control means (17) is designed such that it controls the speed of the relative movement dependently upon the recorded speed of the relative movement.

10. A radiography module, in particular in the form of an X-ray cassette, having a housing into which an apparatus (1) according to any of Claims 1 to 9 is integrated.

## Revendications

1. Dispositif (1) destiné à la lecture des informations radiographiques d'une image radiographique stockées dans une couche fluorescente de mémoire (4), comportant :
- un dispositif d'exposition (13) destiné à exposer la couche fluorescente de mémoire (4) à un rayonnement d'excitation (14),
- un dispositif de détection (16) destiné à détecter un rayonnement d'émission (15) émis par la couche fluorescente de mémoire (4) suite à l'exposition au rayonnement d'excitation (14), le dispositif d'exposition (13) et le dispositif de détection (16) étant solidement associés l'un à l'autre, et
- un dispositif d'entraînement (8) destiné à produire un mouvement relatif entre, d'une part, la couche fluorescente de mémoire (4) et, d'autre part, le dispositif d'exposition (13) et le dispositif de détection (16), et
- un moyen de détection (19, 19', 20, 20', 21, 21') destiné à détecter une vitesse du mouvement relatif,
**caractérisé en ce que**
- il est prévu un moyen de commande (18) destiné à traiter les informations radiographiques extraites de la couche fluorescente de mémoire (4) et conçu de manière à traiter les informations radiographiques lues en fonction de la vitesse détectée du mouvement relatif, ledit moyen de commande fixant, considéré dans le sens du mouvement relatif, une taille de pixel et/ou une intensité des informations radiographiques lues, en fonction de la vitesse détectée du mouvement relatif, et/ou
- il est prévu un moyen de commande supplémentaire (17) destiné à commander le dispositif (1), le moyen de commande supplémentaire (17) étant conçu de manière à commander la lecture des informations radiographiques en fonction de la vitesse détectée du mouvement relatif, celui-ci commandant le dispositif de détection (16) en fonction de la vitesse détectée du mouvement relatif de manière à modifier la durée de perception du rayonnement d'émission (15).

2. Dispositif selon la revendication 1, **caractérisé en ce que** le moyen de détection (19, 19', 20, 20', 21, 21') est conçu de manière à détecter plusieurs fois la vitesse lors de la lecture des informations radiographiques stockées.

3. Dispositif selon la revendication 1 ou 2, **caractérisé en ce que** le moyen de détection (19, 19', 20, 20', 21, 21') est conçu de manière à détecter au moins une vitesse moyenne du mouvement relatif, en détectant la vitesse moyenne entre au moins deux positions relatives occupées par la couche fluorescente de mémoire (4) par rapport au dispositif d'exposition et au dispositif de détection.

4. Dispositif selon la revendication 3, **caractérisé en ce que** la vitesse moyenne est détectée pendant la lecture des informations radiographiques.

5. Dispositif selon la revendication 3 ou 4, **caractérisé en ce que** le moyen de détection (19, 19', 20, 20', 21, 21') présente au moins deux capteurs qui sont associés aux au moins deux positions relatives et servent à déterminer un temps nécessaire au mouvement relatif pour atteindre les au moins deux positions lors de la lecture des informations radiographiques.

6. Dispositif selon la revendication 5, **caractérisé en ce que** les au moins deux capteurs présentent des barrières photoélectriques.

7. Dispositif selon l'une des revendications précédentes, **caractérisé en ce que** le moyen de commande (18) renferme des indications prédéfinies destinées au traitement des informations radiographiques lues et est conçu de manière à choisir au moins une partie des indications prédéfinies en fonction de la vitesse détectée du mouvement relatif et à mettre en oeuvre les indications choisies pour traiter les informations radiographiques.

8. Dispositif selon l'une des revendications précédentes, **caractérisé en ce que** le moyen de commande supplémentaire (17) est conçu de manière à commander le dispositif d'exposition (13) en fonction de la vitesse détectée du mouvement relatif.

9. Dispositif selon l'une des revendications précédentes, **caractérisé en ce que** le moyen de commande supplémentaire (17) est conçu de manière à commander la vitesse du mouvement relatif en fonction de la vitesse détectée du mouvement relatif.

10. Module radiographique, présentant notamment la forme d'une cassette radiographique, comprenant un boîtier, dans lequel est intégré un dispositif (1) selon l'une des revendications 1 à 9.
